# EUROPÄISCHE PATENTSCHRIFT

(11) **EP 1 740 400 B1**
(45) Veröffentlichungstag und Bekanntmachung des Hinweises auf die Patenterteilung: **16.04.2008**
(21) Anmeldenummer: 05707437.9
(22) Anmeldetag: 16.02.2005
(51) Int. Cl.: B60D 1/46, B60G 17/00

(54) **FAHRASSISTENZSYSTEM ZUM ANKUPPELN EINES ANHÄNGERS UNTER EINSATZ EINER FAHRZEUGNIVEAUREGULIERUNG**
DRIVER ASSISTANCE SYSTEM FOR COUPLING A TRAILER USING A VEHICLE LEVEL REGULATOR
SYSTEME D'ASSISTANCE A LA CONDUITE POUR ATTELER UNE REMORQUE AU MOYEN D'UNE REGULATION DE NIVEAU DE VEHICULE

(30) Priorität: 24.02.2004 DE 102004008928
(43) Veröffentlichungstag der Anmeldung: 10.01.2007
(73) Patentinhaber: Bayerische Motorenwerke Aktiengesellschaft, 80809 München (DE)
(72) Erfinder: BAUER, Werner, 81545 München (DE); AUGST, Alexander, 80937 München (DE)
(86) Internationale Anmeldenummer: PCT/EP2005/001570
(87) Internationale Veröffentlichungsnummer: WO 2005/080100

(56) Entgegenhaltungen:
- EP-A- 1 249 365
- DE-A1- 2 335 479
- GB-A- 2 387 582
- US-A- 5 650 764

## Beschreibung

Die Erfindung bezieht sich auf ein Fahrassistenzsystem zum Ankuppeln einer an einem Fahrzeug angebrachten Anhängerkupplung an ein an einem Anhänger angebrachten Gegenstück.

Das Ankuppeln eines Anhängers an ein Fahrzeug ist in der Regel umständlich und oftmals problembehaftet. Bei herkömmlichen Fahrzeugen ist keine direkte Sicht auf die am Fahrzeug angebrachte Anhängerkupplung möglich, wodurch ein gezieltes Platzieren der am Fahrzeug angebrachten Anhängerkupplung in der Nähe des am Anhänger angebrachten Gegenstücks nur schwer möglich ist, wenn außer dem Fahrer keine weiteren Hilfspersonen anwesend sind.

Aus der EP 1 249 365 B1 ist ein Fahrunterstützungssystem bekannt, welches Abhilfe für das oben genannte Problem bringen soll. Das dort beschriebene Fahrunterstützungssystem weist eine Anzeige eines Bildes von einer Rückfahrkamera auf einer Anzeigeeinrichtung auf, dem bestimmte automatisch erzeugte Hilfslinien überlagert werden können, wenn eine vorgegebene Anweisungseingabe empfangen wird. Durch diese Hilfslinien kann der Fahrer auf der Anzeigeeinrichtung erkennen, wie er das Fahrzeug lenken muss,um die am Fahrzeug angebrachte Anhängerkupplung in der Nähe des am Anhänger angebrachten Gegenstücks zu platzieren.

Das eigentliche Zusammenführen der beiden Teile der Anhängerkupplung stellt weiterhin einen manuellen Vorgang dar.

Nach dem gegenwärtigen Stand der Technik kann das Zusammenführen der beiden Kupplungsteile mit Hilfe einer Gewindestütze geschehen, die mit Hilfe einer Kurbel unter dem Einsatz der menschlichen Muskelkraft den anhängerseitigen Teil der Kupplung anheben und auf die fahrzeugseitigen Teil der Kupplung heruntergelassen kann.

Dies ist mit einem Kraftaufwand, Komforteinschränkung und Zeitverlust verbunden. Eine denkbare Alternative stellt eine motorisierte Gewindeeinrichtung dar, die allerdings zu einer deutlichen Kostenerhöhung der Einrichtung führt.

Ein Fahrassistenzsystem, welches die Merkmale des Oberbegriffs des Anspruchs 1 aufweist, ist aus der gattungsbildenden GB 7 387 582 A bekannt. Aufgabe der Erfindung ist ein Fahrerassistenzsystem anzugeben, das ein einfaches schnelles und auto matisiertes Ankuppeln eines Anhängers an ein Fahrzeug ermöglicht.

Diese Aufgabe wird erfindungsgemäß durch ein Fahrerassistenzsystem nach Patentanspruch 1 gelöst. Vorteilhafte Weiterbildungen sind die Gegenstände der abhängigen Ansprüche.

Das erfindungsgemäße Fahrerassistenzsystem zum Ankuppeln einer an einem Fahrzeug angebrachten Anhängerkupplung an ein an einem Anhänger angebrachten Gegenstück zeichnet sich dadurch aus, dass eine Steuereinheit im Fahrzeug vorgesehen ist, die bei Vorliegen einer vorgegebenen ersten Bedingung zumindest einen Aktuator einer Fahrzeugniveauregulierung derart ansteuert, dass zumindest der hintere Teil des Fahrzeugs abgesenkt wird und/oder bei Vorliegen einer vorgegebenen zweiten Bedingung zumindest einen Aktuator einer Fahrzeugniveauregulierung derart ansteuert, dass zumindest der hintere Teil des Fahrzeugs angehoben wird.

Ein derartiges Fahrerassistenzsystem bietet den Vorteil, ohne große Anstrengung einen Anhänger an ein Kraftfahrzeug anzukuppeln. Anhänger können bspw. Wohnmobile sein, oder Anhänger, die zum Transport schwerer oder sperriger Güter oder zum Tiertransport dienen. Das Steuergerät, das die Aktuatoren der Fahrzeugniveauregulierung ansteuert, kann aus Kosten- und/oder Platzgründen mit einem bereits im Fahrzeug vorhanden Steuergerät kombiniert sein oder als eine reine Softwarefunktion in einem oder mehreren bereits bestehenden Steuergeräten (eventuell auch nachträglich) implementiert werden. Da eine Fahrzeugniveauregulierung bereits in vielen Fahrzeugen vorhanden ist, entstehen keine zusätzlichen Kosten für diese Aktuatoren für das erfindungsgemäße Fahrerassistenzsystem. Je nachdem, wie die Aktuatoren der Fahrzeugniveauregulierung bzw. die Fahrzeugniveauregulierung selbst ausgestaltet sind, wird bei Vorliegen der vorgegebenen ersten bzw. zweiten Bedingung entweder der hintere Teil des Fahrzeugs allein oder das gesamte Fahrzeug abgesenkt bzw. angehoben.

Die Absenkung bzw. Anhebung erfolgt um eine angemessene Höhe. Durch die Absenkung kann die fahrzeugseitige Kupplung unter dem anhängerseitigen Gegenstück platziert werden, ohne dass das letztere zuvor angehoben werden muss. Unter dem Fahrzeugniveauregulierungssystem kann auch ein regelbares Luftfederungssystem oder ein Stabilisierungssystem für die Kurvenfahrt verstanden werden.

Die vorgegebene erste Bedingung liegt dann vor, wenn der mittels einer Sensorseinheit erfasste Abstand zwischen der am Fahrzeug angebrachten Anhängerkupplung und dem am Anhänger angebrachten Gegenstück einen vorgegebenen Abstandswert unterschreitet und/oder wenn die am Fahrzeug angebrachten Anhängerkupplung mit dem am Anhänger angebrachten Gegenstück ohne Rangieren zusammenfahrbar ist.

Ohne weiteres Rangieren bedeutet hierbei, dass das Fahrzeug bereits so positioniert ist, dass der Lenkwinkel, aber nicht mehr die Fahrrichtung (vorwärts oder rückwärts) geändert wird.

Vorteilhafterweise dient die Sensoreinheit zu einer automatischen Erkennung von zumindest dem am Anhänger angebrachten Gegenstück zur Bestimmung ihrer relativen Position und/oder des Abstandes zu der fahrzeugsseitigen Kupplung. Die besagte Sensorseinheit kann auf einem optischen, ultraschalbasierten, kapazitiven, induktiven, Sensor basieren, eine Kombination dieser Sensoren enthalten oder auf einer RADAR- oder LIDAR-Einrichtung basieren.

Unter den optischen Sensoren kann hier auch ein auf dem Prinzip TOL (=Time of Flight) basierendes Sensorsystem verstanden werden. Die Bestimmung der relativen Position und/oder des Abstandes zwischen den beiden Teilen der Anhängerkupplung ist als die Bedingung zu der Absenkung des zumindest hinteren Fahrzeugteils ist insoweit vorteilhaft, um mit einer großen Wahrscheinlichkeit sicherzustellen, dass der Fahrzeugführer eine Ankupplung des Anhängers beabsichtigt. Die Sensoreinheit umfasst auch die entsprechende Datenauswertung. Diese kann räumlich getrennt von den Sensoren in einem separaten oder anderem bereits bestehenden Steuergerät realisiert werden.

Zu einer erleichterten automatischen Erkennung.der Kupplungsteile können diese bspw. eine spezielle Markierung tragen. Die Markierung kann eine spezielle Farbe, Textur oder Wellenreflektionseigehschaften besitzen.

Anstelle von der automatischen Sensierung/Objekterkennung kann zur Aktivierung des Ankupplungsvorgangs aber auch nicht erfindungsgemäss ein einziges dafür vorgesehenes Fahrzeugniveauregulierungs-Bedienelement betätigt werden. Anstelle des einzigen dafür vorgesehenes Fahrzeugniveauregulierungs-Bedienelements kann auch ein ohnehin vorhandener Taster oder Schalter mit einer Doppelfunktion belegt werden. Somit wird das Fahrzeug mit absoluter Sicherheit nur abgesenkt, wenn der Fahrer dies wünscht.

Vorteilhafterweise ist die Sensorseinheit als Weiterbildung eines umfelderkennenden oder bildwiedergebenden Assistenzsystems ausgebildet. Dies kann vorteilhafterweise ein Rückfahrkamerasystem und/oder ein Park Distance Control System (PDC) sein. Hierfür kann bspw. die Bildauswertung in einem bereits bestehenden Rückfahrkamerasystem bspw. derart ausgebildet sein, dass sie in einem ersten Schritt mittels einer automatischen Objekterkennungseinheit die am Fahrzeug angebrachte Anhängerkupplung und das am Anhänger angebrachte Gegenstück erkennt und ihre relative Position bzw. nur den Abstand zwischen ihnen automatisch aus den Bilddaten berechnet. Die automatische Objekterkennungseinheit kann derart ausgestaltet sein, dass auch bei einem Wechsel der am Fahrzeug angebrachten Anhängerkupplung diese eindeutig erkannt wird. Unter einem umfelderkennenden Assistenzsystems kann bspw. auch ein optisch oder RADAR- oder LIDAR-basiertes Spurführungsassistenzsystem oder eine Pre-Crash-Sensoreinheit verstanden werden.

Vorteilhafterweise ist die Sensorseinheit mit einer Anzeigeeinrichtung verbunden, die an einem Ort angebracht ist, der von einem Fahrersitz aus gesehen werden kann und die. Position der am Fahrzeug angebrachten Anhängerkupplung relativ zur Position des am Anhänger angebrachten Gegenstücks als ein geometrisch transformiertes Videobild oder in symbolischer Form aufzeigt.

Dadurch hat der Fahrer die Möglichkeit, mittels der Anzeigeeinrichtung auf einfache Weise die am Fahrzeug angebrachte Anhängerkupplung direkt bei dem am Anhänger angebrachtem Gegenstück zu platzieren. Sind beide Kupplungsteile ausreichend günstig genug zueinander positioniert, kann nicht erfindungsgemäss es dem Fahrer automatisch mitgeteilt werden, dass er zumindest den hinteren Teil des Fahrzeugs durch Betätigung eines Bedienelements automatisch absenken lassen sollte. Das Bedienelement kann auch als Teil eines mulifunktionalen Bedienelements oder ein Sprach- oder Gestikerkennung ausgebildet sein kann. Die Anzeigeeinrichtung kann als ein Head-Up-Display ausgebildet sein. Die Darstellung kann entweder eine symbolische Darstellung der beiden Kupplungsteile und/oder eine Darstellung eines geometrisch transformierten Kamerabildes sein. Unter einer geometrischen Transformation des Bildes kann eine virtuelle Veränderung der Kameraperspektive und/oder elektronische Entzerrung und/oder eine Vergrößerung oder Verformung bestimmter Bildbereiche verstanden werden. Die Darstellung kann auch derart erfolgen, dass sie dem Fahrer einen dreidimensionalen Eindruck der Szene vermittelt.

Vorteilhafterweise sind aus Komfort-, Design- oder Kostengründen auf der Anzeigeeinrichtung Rangier-Hilfslinien und/oder Hilfssymbole und/oder ein Soft-Key als Fahrzeugniveauregulierungs-Bedienelement dargestellt.

Unterschreitet der Abstand zwischen der am Fahrzeug angebrachten Anhängerkupplung und dem am Anhänger angebrachte Gegenstück einen vorgegebenen Grenzwert und/oder weist die relative Position der beiden Kupplungsteile auf einen unmittelbar bevorstehenden Kupplungsvorgang hin, erscheint nicht erfindungsgemäss auf der Anzeigeeinrichtung das Fahrzeugniveauregulierungs-Bedienelement als Soft-Key. Dem Fahrer wird dadurch mitgeteilt, dass er nun durch die Betätigung des besagten Bedienelements zumindest die Absenkung des hinteren Teil seines Fahrzeugs einleiten oder bestätigen sollte, um die am Fahrzeug angebrachte Anhängerkupplung unter das am Anhänger angebrachte Gegenstück zu platzieren. Die erfindungsgemäße Weiterbildung durch die Anzeige von Rangier- Symbolen ist ebenfalls sehr vorteilhaft.

Symbole können zumindest eine empfohlene Lenkrichtung zum zusammenführen der beiden Kupplungsteile und/oder eine numerische Anzeige des Abstandes zwischen den beiden Kupplungsteilen darstellen. Wird bspw. durch die Sensorseinheit die am Fahrzeug angebrachte Anhängerkupplung und das am Anhänger angebrachte Gegenstück automatisch erkannt, kann die relative Position der beiden Komponenten (Anhängerkupplung und Gegenstück) auf der Anzeigeeinrichtung schematisch dargestellt werden, wodurch dem Fahrer erleichtert werden soll, die am Fahrzeug angebrachte Anhängerkupplung möglichst komfortabel und präzise bei oder unter dem anhängerseitigen Gegenstück zu platzieren. Rangier-Symbole können auch Linien sein, die bspw. als optimale berechnete Fahrlinie und symbolisch dargestellte empfohlene Lenkvorgänge eingeblendet werden.

Vorteilhafterweise steuert die Steuereinheit bei Vorliegen der vorgegebenen ersten Bedingung in Abhängigkeit von der durch die Sensorseinheit erfassten relativen Position der am Fahrzeug angebrachten Anhängerkupplung zu dem am Anhänger angebrachten Gegenstück ein Lenksystem und/oder eine Antriebseinheit und/oder eine Bremseinheit des Fahrzeugs derart an, dass die am Fahrzeug angebrachte Anhängerkupplung unter dem am Anhänger angebrachten Gegenstück platziert wird. Hierbei kann es aus Sicherheits- und/oder gesetzlichen Gründen sinnvoll sein, die automatische Ausführung der beschriebenen automatischen Aktionen bspw. in mehreren Schritten, bspw durch Betätigung eines Bedienelements, bestätigen zu lassen. Somit besteht die Möglichkeit die am Fahrzeug angebrachte Anhängerkupplung teil- oder vollautomatisch direkt unter dem am Anhänger angebrachten Gegenstück zu platzieren.

Die vorgegebene zweite Bedingung liegt dann vor, wenn die mittels der Sensorseinheit erfasste am Fahrzeug vorhandene Anhängerkupplung unter einem am Anhänger vorhandenen Gegenstück platziert ist. Hiermit kann die Notwendigkeit eines manuellen Absenkens der anhängerseitigen Kupplung auf die fahrzeugseitigen Kupplung, wie dies derzeit verbreitet ist, entfallen. Das Fahrzeugniveauregulierungs-Bedienelement zum Anheben kann das gleiche Bedienelement wie zu absenken sein.

Der erfindungsgemäße Bewegungsablauf des Fahrzeuges gegenüber dem Anhänger zum Ankuppeln des Anhängers wurde in dieser Beschreibung schematisch in mehrere Schritte (anfahren, Fahrgestellniveau absenken, unter die anhängerseitige Kupplung fahren, Fahrgestellniveau anheben) unterteilt. Bei dem erfindungsgemäßen Fahrerassistenzsystem kann das Ankuppeln eines Anhängers auch in einer einzigen kontinuierlichen Bewegung, die sich aus Überlagerung von mindestens zwei der erfindungsgemäß durchzuführenden Bewegungen zusammensetzt, geschehen, ohne den Inhalt der Patentansprüche zu verlassen.

Vorteilhafterweise wird nach der Ausführung von einem oder mehrerer oben beschriebener Verfahrensschritte der hintere Teil des Fahrzeugs derart angehoben, dass das am Anhänger angebrachte Gegenstück derart mitangehoben wird, dass eine die den Anhänger im abgestellten Zustand stützende Einrichtung automatisch eingeklappt wird.

Die stützende Einrichtung kann beispielsweise mit einer Feder ausgestattet sein, die in einer gespannten Lage ist, wenn sie den Anhänger abstützt. Wird das Gewicht des Anhängers verlagert, dass auf der stützenden Einrichtung kein Gewicht mehr lagert, zieht sich die Feder zusammen und die stützende Einrichtung wird automatisch nach oben geklappt.

In der Zeichnung ist ein Ausführungsbeispiel der Erfindung dargestellt. Es zeigt
- Fig. 1: ein Fahrzeug mit einer am Fahrzeug angebrachten Anhängerkupplung und einen Anhänger mit einem am Anhänger angebrachten Gegenstück und
- Fig. 2: ein Ausführungsbeispiel des erfindungsgemäßen Fahrerassistenzsystems.

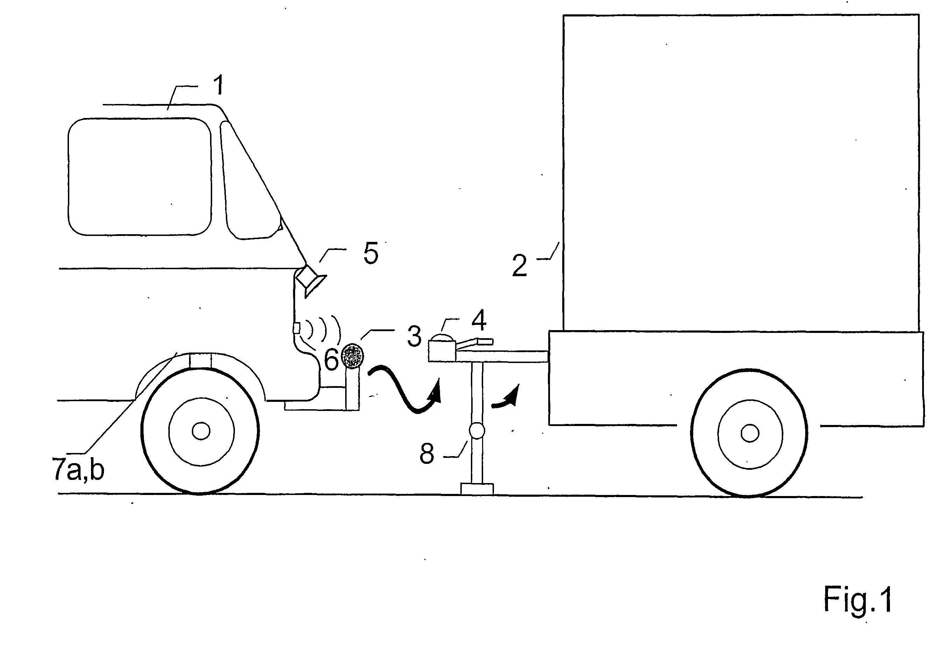

Die Fig. 1 zeigt ein Fahrzeug 1, an dem eine Rückfahrkamera 5 als optischer Sensor, ein Ultraschallsensor 6 und eine Anhängerkupplung 3 angebracht ist. An einem Anhänger 2 ist ein Gegenstück 4 zur Anhängerkupplung 3 angebracht und wird durch eine den Anhänger stützende Einrichtung 8 ohne manuelle Kurbeleinrichtung gestützt.

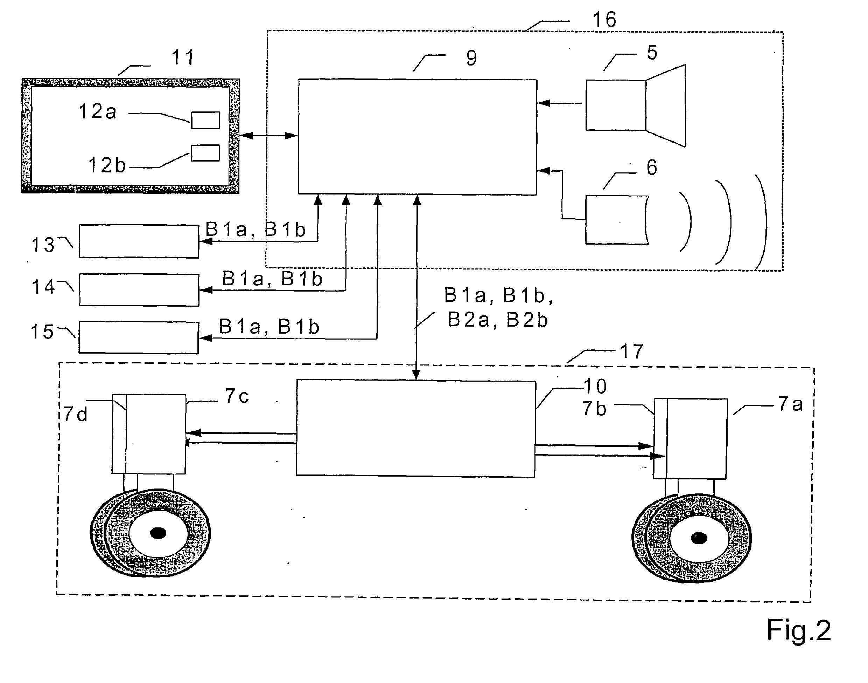

Fig. 2 zeigt ein Ausführungsbeispiel des erfindungsgemäßen Fahrerassistenzsystems als ein Blockdiagramm. Gleiche Bauteile in Fig. 1 und Fig. 2 sind mit gleichen Bezugszeichen versehen.

Durch die Steuereinheit 9 werden die Aktuatoren 7a bis 7d der Fahrzeugniveauregulierung 17 angesteuert. Die Fahrzeugniveauregulierung besitzt wiederum ein eigenes Steuergerät 10, in dem ebenfalls die Steuereinheit des erfindungsgemäßen Fahrerassistenzsystems enthalten sein kann.

Das als Beispiel schematisch dargestellte Fahrerassistenzsystem umfasst zumindest eine Rückfahrkamera 5 als optischen Sensor und/oder einen oder mehrere Ultraschalsensoren Sensor 6. Die Rückfahrkamera 5 und der Ultraschallsensor 6 sind mit einer Steuereinheit 9 verbunden, die hier beispielsweise als ein Teil vom Rückfahrkamerasystem ausgebildet ist. Aus Kostengründen kann die Sensoreinheit nur auf dem Heckkamerasystem basieren. Die Sensoreinheit 16 verfügt über eine Steuereinheit 9 die in diesem Beispiel als Teil des Steuergeräts des Rückfahrkamerasystems realisiert wird. Die Steuereinheit kann aber auch lediglich eine Softwarefunktion sein, die in einem bereits im Fahrzeug vorhandenen Steuergerät implementiert ist.

Weiter umfasst das System eine Anzeigeeinheit 11 mit einem Fahrzeugniveauregulierungs-Bedienelement 12, das auch in Form von zwei Bedienelemente 12a und 12b zum absenken bzw. anheben des zumindest hinteren Teil des Fahrzeuges 1 oder als Teil eines mulifunktionalen Bedienelements oder ein Sprach- oder Gestikerkennung ausgebildet sein kann. Durch das Steuergerät 10 der Fahrzeugniveauregulierung 17 werden die Aktuatoren 7a bis 7d einer Fahrzeugniveauregulierung 17 angesteuert.

Das erfindungemäße Fahrerassistenzsystem zum Ankuppeln einer an einem Fahrzeug 1 angebrachten Anhängerkupplung 3 an ein an einem Anhänger 2 angebrachten Gegenstück 4 zeichnet sich dadurch aus, dass eine Steuereinheit 9 im Fahrzeug 1 vorgesehen ist und bei Vorliegen einer vorgegebenen ersten Bedingung B1a oder B1b zumindest ein Aktuator der Aktuatoren 7a bis 7d der Fahrzeugniveauregulierung 17 derart ansteuert, dass zumindest der hintere Teil des Fahrzeugs 1 abgesenkt wird und/oder bei Vorliegen einer vorgegebenen zweiten Bedingung B2a oder B2b zumindest ein Aktuator der Aktuatoren 7a bis 7d der Fahrzeugniveauregulierung 17 derart ansteuert, dass zumindest der hintere Teil des Fahrzeugs 1 angehoben wird.

Die vorgegebene erste Bedingung liegt vor, wenn der mittels der Sensorseinheit 16 erfasste Abstand zwischen der am Fahrzeug 1 angebrachten Anhängerkupplung 3 und dem am Anhänger 2 angebrachten Gegenstück 4 zumindest einen vorgegebenen Abstandswert unterschreitet und/oder wenn die am Fahrzeug 1 angebrachten Anhängerkupplung 3 mit dem am Anhänger 2 angebrachten Gegenstück 4 ohne Rangieren zusammenfahrbar ist (B1a) oder nicht erfindungsgemäss wenn das dafür vorgesehene Fahrzeugniveauregulierungs-Bedienelement 12a bzw. 12b (in diesem Bild als ein Soft-Key im Bild von der Heckkamera eingeblendet) betätig wird (B1b).

Wie bereits erwähnt ist die Sensorseinheit 16 mit der Anzeigeeinrichtung 11 verbunden, die an einem Ort angebracht ist, der von einem Fahrersitz aus gesehen werden kann und die Position der am Fahrzeug 1 angebrachten Anhängerkupplung 3 relativ zur Position des am Anhänger 2 angebrachten Gegenstücks 4 aufzeigt. Das Fahrzeugniveauregulierungs-Bedienelement 12a bzw. 12b ist im Erreichbarkeitsbereich des Fahrers angebracht, bei dessen Betätigung die Steuereinheit zumindest einen der Aktuatoren 7a - 7d der Fahrzeugniveauregulierung 17 derart ansteuert, dass sich zumindest der hintere Teil des Fahrzeugs 1 absenkt Das Fahrzeugniveauregulierungs-Bedienelement 12a bzw. 12b ist als Soft-Key auf der Anzeigeeinrichtung 11 ausgestaltet. Die auf der Anzeigeeinrichtung 11 dargestellte Anzeige wird durch eine übersichtliche symbolische Darstellung der automatisch erzeugten Rangiervorschlägen, bspw. in Form von Pfeilen, ergänzt.

Das Fahrerassistenzsystem kann in einer besonderen Ausgestaltungsmöglichkeit mittels eines hier nicht dargestellten Bedienelements derart eingestellt werden, dass die Steuereinheit 9 bei Vorliegen der vorgegebenen ersten Bedingung B1a bzw. B1b in Abhängigkeit von der durch die Sensorseinheit 16 erfasste relative Position der am Fahrzeug 1 angebrachten Anhängerkupplung 3 zu dem am Anhänger 2 angebrachten Gegenstück 4 ein Lenksystem 13 und/oder eine Antriebseinheit 14 und/oder eine Bremseinheit 15 des Fahrzeugs 1 derart ansteuert, dass die am Fahrzeug 1 angebrachte Anhängerkupplung 3 unter dem am Anhänger 2 angebrachten Gegenstück 4 vollautomatisch oder teilautomatisch platziert wird.

Bei einem abgesenkten Fahrzeug 1 und bei Vorliegen der vorgegebenen zweiten Bedingung B2a bzw. B2b steuert die Steuereinheit 9 zumindest einen der Aktuatoren 7a - 7b der Fahrzeugniveauregulierung 17 derart an, dass zumindest der hintere Teil des Fahrzeugs 1 angehoben wird. Die vorgegebene zweite Bedingung liegt vor, wenn die mittels der Sensorseinheit 16 erfasste am Fahrzeug 1 vorhandene Anhängerkupplung 3 unter dem am Anhänger 2 vorhandenen Gegenstück 4 platziert ist (B2a) oder nicht erfindungsgemäss wenn ein Fahrzeugniveauregulierungs-Bedienelement (B2b) betätig wird.

Es können eine Vielzahl weiterer Details durchaus abweichend von obiger Beschreibung gestaltet sein, ohne den Inhalt der Patentansprüche zu verlassen.

## Patentansprüche

1. Fahrerassistenzsystem zum Ankuppeln einer an einem Fahrzeug (1) angebrachten Anhängerkupplung (3) an ein an einem Anhänger (2) angebrachten Gegenstück (4), wobei eine Steuereinheit (9) im Fahrzeug (1) vorgesehen ist, die bei Vorliegen einer vorgegebenen ersten Bedingung (B1a;B1b) zumindest einen Aktuator (7a;7b;7c;7d) einer Fahrzeugniveauregulierung (17) derart ansteuert, dass zumindest der hintere Teil des Fahrzeugs (1) abgesenkt wird und/oder bei Vorliegen einer vorgegebenen zweiten Bedingung (B2a;B2b) zumindest einen Aktuator (7a;7b;7c;7d) einer Fahrzeugniveauregulierung (17) derart ansteuert, dass zumindest der hintere Teil des Fahrzeugs (1) angehoben wird, **dadurch gekennzeichnet, dass** die vorgegebene erste Bedingung vorliegt, wenn der mittels einer Sensorseinheit (16) erfasste Abstand zwischen der am Fahrzeug (1) angebrachten Anhängerkupplung (3) und dem am Anhänger (2) angebrachten Gegenstück (4) einen vorgegebenen Abstandswert unterschreitet und/oder wenn die am Fahrzeug (1) angebrachten Anhängerkupplung (3) mit dem am Anhänger (2) angebrachten Gegenstück (4) ohne Rangieren zusammenfahrbar ist (B1a), und /oder die zweite Bedingung vorliegt, wenn mittels der Sensoreinheit (16) erkannt wird, dass die am Fahrzeug (1) angebrachten Anhängerkupplung (3) unter dem am Anhänger (2) angebrachten Gegenstück (4) platziert ist (B2a).

2. Fahrerassistenzsystem nach Patentanspruch 1 mit einer Sensoreinheit, **dadurch gekennzeichnet, dass** die Sensorseinheit (16) zumindest einen optischen und/oder ultraschallbasierten und/oder kapazitiven und/oder induktiven Sensor (5;6) und/oder eine RADAR- und/oder eine LIDAR-basierte Einrichtung zum Erfassen des Abstands zwischen der am Fahrzeug (1) angebrachten Anhängerkupplung (3) und dem am Anhänger (2) angebrachten Gegenstück (4) umfasst.

3. Fahrerassistenzsystem nach einem der vorangegangenen Patentansprüche, **dadurch gekennzeichnet, dass** die Sensorseinheit (16) als Weiterbildung eines umfelderkennenden oder bildwiedergebenden Assistenzsystems ausgebildet ist.

4. Fahrerassistenzsystem nach Patentanspruch 3, **dadurch gekennzeichnet, dass** das umfeldumfassende Assistenzsystem ein Rückfahrkamerasystem und/oder ein Park Distance Control System ist.

5. Fahrerassistenzsystem nach einem der vorangegangenen Patentansprüche, **dadurch gekennzeichnet, dass** die Sensorseinheit (16) mit einer Anzeigeeinrichtung (11) verbunden ist, die an einem Ort angebracht ist, der von einem Fahrersitz aus gesehen werden kann und die Position der am Fahrzeug (1) angebrachten Anhängerkupplung (3) relativ zur Position des am Anhänger (2) angebrachten Gegenstücks (4) als ein geometrisch transformiertes Videobild oder in symbolischer Form aufzeigt.

6. Fahrerassistenzsystem nach Patentanspruch 5, **dadurch gekennzeichnet, dass** auf der Anzeigeeinrichtung Rangier-Symbole und/oder ein Soft-Key als Fahrzeugniveauregulierungs-Bedienelement (12a) dargestellt sind.

7. Fahrerassistenzsystem nach einem der vorangegangenen Patentansprüche mit einer Sensorseinheit (16), **dadurch gekennzeichnet, dass** die Steuereinheit (9) bei Vorliegen der vorgegebenen ersten Bedingung (B1a;B1 b) in Abhängigkeit von der durch die Sensorseinheit (16) erfassten relativen Position der am Fahrzeug (1) angebrachten Anhängerkupplung (3) zu dem am Anhänger (2) angebrachten Gegenstück (4) ein Lenksystem (13) und/oder eine Antriebseinheit (14) und/oder eine Bremseinheit (15) des Fahrzeugs (1) derart ansteuert, dass die am Fahrzeug (1) angebrachte Anhängerkupplung (3) unter dem am Anhänger (2) angebrachten Gegenstück (4) platziert wird.

8. Fahrerassistenzsystem nach einem der vorangegangenen Patentansprüche, **dadurch gekennzeichnet, dass** der hintere Teil des Fahrzeugs (1) derart angehoben wird, dass das am Anhänger (2) angebrachte Gegenstück (4) derart mitangehoben wird, dass eine die den Anhänger (2) im abgestellten Zustand stützende Einrichtung (8) automatisch eingeklappt wird.

## Claims

1. A driver assistance system for attaching a coupling (3) on a vehicle (1) to a mating member (4) on a trailer (2), wherein a control unit (9) is provided in the vehicle (1) and, if a first set condition (B1a; B1b) is met, actuates at least one actuator (7a; 7b; 7c; 7d) of a vehicle leveller (17) so that at least the rear part of the vehicle (1) is lowered and/or if a second set condition (B2a; B2b) is met, the control unit actuates at least one actuator (7a; 7b; 7c; 7d) of a vehicle leveller (17) so that at least the rear part of the vehicle (1) is raised, **characterised in that** the first set condition is met when the distance detected by a sensor unit (16) between the trailer coupling (3) on the vehicle (1) and the mating member (4) on the trailer (2) falls below a set value and/or when the trailer coupling (3) on the vehicle (1) can be connected to the mating member (4) on the trailer (2) without manoeuvring (B1a), and/or the second condition applies when the trailer coupling (3) on the vehicle (1) is placed under the mating member (4) on the trailer (2) (B2a).

2. A driver assistance system according to claim 1 comprising a sensor unit, **characterised in that** the sensor unit (16) comprises at least one optical and/or ultrasound-based and/or capacitive and/or inductive sensor (5; 6) and/or a Radar and/or a Lidar-based device for detecting the distance between the trailer coupling (3) on the vehicle (1) and the mating member (4) on the trailer (2).

3. A driver assistance system according to any of the preceding claims, **characterised in that** the sensor unit (16) is an extension of an environment-recognising or image-reproducing assistance system.

4. A driver assistance system according to claim 3, **characterised in that** the environment-detecting assistance system is a reversing camera system and/or a park distance control system.

5. A driver assistance system according to any of the preceding claims, **characterised in that** the sensor unit (16) is connected to a display device (11) disposed at a place where it can be seen from a driver's seat and the sensor unit displays the position of the trailer coupling (3) on the vehicle (1) relative to the position of the mating member (4) on the trailer (2) in the form of a geometrically transformed video image or in symbolic form.

6. A driver assistance system according to claim 5, **characterised in that** manoeuvring symbols and/or a vehicle leveller control element (12a) are shown in the form of a soft key on the display device.

7. A driver assistance system according to any of the preceding claims, comprising a sensor unit (16), **characterised in that** if the first set condition (B1a; B1b) is met, depending on the position of the trailer coupling (3) on the vehicle (1) detected by the sensor unit (16) relative to the mating member (4) on the trailer (2), the control unit actuates a steering system (13) and/or a drive unit (14) and/or a brake unit (15) of the vehicle (1) so that the trailer coupling (3) on the vehicle (1) is placed under the mating member (4) on the trailer (2).

8. A driver assistance system according to any of the preceding claims, **characterised in that** the rear part of the vehicle (1) is raised so that the mating member (4) on the trailer (2) is also raised so that the device (8) which supports the trailer (2) when parked is automatically retracted.

## Revendications

1. Système d'assistance au conducteur pour atteler un dispositif d'attelage (3) placé sur un véhicule (1) à un pendant (4) placé sur une remorque (2), un bloc de commande (9) étant prévu dans le véhicule (1), lequel bloc de commande excite au moins un actionneur (7a ; 7b ; 7c ; 7d) d'une régulation de niveau de véhicule (17) si une première condition donnée (B1a ; B1b) est remplie de manière à ce qu'au moins la partie arrière du véhicule (1) soit abaissée et/ ou excite un actionneur (7a ; 7b ; 7c ; 7d) d'une régulation de niveau de véhicule (17) si une deuxième condition donnée (B2a ; B2b) est réunie de manière à ce qu'au moins la partie arrière du véhicule (1) soit soulevée,
**caractérisé en ce que**
la première condition donnée est remplie lorsque l'écart enregistré par une unité de capteur (16) entre le dispositif d'attelage (3) monté sur le véhicule (1) et le pendant (4) fixé sur la remorque (2) est inférieur à une valeur d'écart donnée et/ou lorsque le dispositif d'attelage (3) monté sur le véhicule (1) peut être assemblé au pendant (4) fixé sur la remorque (2) sans manoeuvrer davantage (B1a) et/ou la deuxième condition donnée est remplie lorsque l'unité de capteur (16) détecte que le dispositif d'attelage (3) disponible sur le véhicule (1) est placé sous un pendant (4) disponible (B2a) sur la remorque (2).

2. Système d'assistance au conducteur selon la revendication 1 avec une unité de capteur,
**caractérisé en ce que**
l'unité de capteur (16) peut comprendre un capteur (5 ; 6) optique et/ ou capacitif et/ou inductif et/ou basé sur des ultrasons et/ou un dispositif basé sur RADAR et/ou sur LIDAR pour détecter l'écart entre le dispositif d'attelage (3) monté sur le véhicule (1) et le pendant (4) fixé sur la remorque (2).

3. Système d'assistance au conducteur selon l'une des revendications précédentes,
**caractérisé en ce que**
l'unité de capteur (16) est un perfectionnement d'un système d'assistance reconnaissant l'environnement ou reproduisant une image.

4. Système d'assistance au conducteur selon la revendication 3
**caractérisé en ce que**
le système d'assistance reconnaissant l'environnement est un système de caméra de marche arrière et/ou un Park Distance Control System.

5. Système d'assistance au conducteur selon l'une des revendications précédentes,
**caractérisé en ce que**
l'unité de capteur (16) est avantageusement liée à une unité de visualisation (11) placée en un lieu visible depuis un siège conducteur et affichant la position du dispositif d'attelage (3) monté sur le véhicule (1) par rapport à la position du pendant (4) fixé sur la remorque (2) sous forme d'image vidéo transformée géométriquement ou de symbole.

6. Système d'assistance au conducteur selon la revendication 5
**caractérisé en ce que**
des symboles de manoeuvre et/ou une touche d'affichage sont représentés sur l'unité de visualisation en tant qu'organe de commande de régulation de niveau de véhicule (12a).

7. Système d'assistance au conducteur selon l'une des revendications précédentes avec une unité de capteur (16),
**caractérisé en ce que**
le bloc de commande (9) excite un système de direction (13) et/ou une unité d'entraînement (14) et/ou une unité de freinage (15) du véhicule (1) lorsque la première condition donnée (B1a ; B1b) est remplie en fonction de la position relative détectée par l'unité de capteur (16) du dispositif d'attelage (3) monté sur le véhicule (1) par rapport au pendant (4) fixé sur la remorque (2) de manière à ce que le dispositif d'attelage (3) monté sur le véhicule (1) soit placé sous le pendant (4) fixé sur la remorque (2).

8. Système d'assistance au conducteur selon l'une quelconque des revendications précédentes,
**caractérisé en ce que**
la partie arrière du véhicule (1) est soulevée de manière à ce que le pendant (4) fixé sur la remorque (2) soit également soulevé de sorte qu'un dispositif (8) soutenant la remorque (2) à l'état désactivé soit rabattu automatiquement.
